# EUROPEAN PATENT SPECIFICATION

(11) **EP 3 182 686 B1**
(45) Date of publication and mention of the grant of the patent: **06.11.2019**
(21) Application number: 15201013.8
(22) Date of filing: 18.12.2015
(51) Int. Cl.: H04N 1/00, B64D 11/00, H04N 7/10

(54) **CAMERA CAPTURE POSTING**
VERSENDEN EINER KAMERAAUFNAHME
PUBLICATION DE CAPTURE DE CAMÉRA

(43) Date of publication of application: 21.06.2017
(73) Proprietor: Airbus Operations GmbH, 21129 Hamburg (DE)
(72) Inventor: Schaupmann, Christian, 21129 Hamburg (DE); Coto-Lopez, Gerald, 21129 Hamburg (DE)
(74) Representative: Frenkel, Matthias Alexander

(56) References cited:
- EP-A1- 2 744 217
- EP-A2- 2 051 486
- EP-A2- 2 568 696
- US-A1- 2002 093 564
- US-A1- 2003 200 546
- US-A1- 2005 278 753
- US-A1- 2006 159 164

## Description

### Technical Field

The present disclosure relates to image information in a communication network. It relates in particular to a technique for providing image information from an aircraft to a party of a terrestrial communication network. The technique may be embodied in apparatuses, systems, methods and computer programs.

### Background

There has been an ongoing growth in the exchange of graphical content among users of communication networks. Increased network bandwidths on one side and the provision of communication devices, such as smart phones or tablet PC's, with built-in functionalities for capturing and displaying pictures on the other side have facilitated the creation and exchange of graphical contents considerably. At present, common scenarios for a provision of image information by users of a communication network include the transmission of photographs to selected contacts by means of direct peer-to-peer communication or posting captured photographs on websites, such as a website of a social media service.

In parallel to the above development, while plane journeys have become more and more popular, aircraft manufacturers started to equip passenger aircrafts with on-board cameras as part of in-flight entertainment (IFE). Cameras which are mounted, for example, at the tail or the wing tips of an aircraft are suited to capture panoramic views as well as external perspectives on parts of the aircraft itself. Such images are provided to passengers inside the aircraft via one or more displays of an in-flight entertainment (IFE) system.

Techniques related to recording a camera view and enabling an aircraft crew to transmit it to the ground have been described in the US 2002/0093564 A1.

Pictures from on-board cameras of an aircraft are often very attractive to the users of an IFE system. Aside from other reasons, the pictures show exceptional views and are associated by many with positive emotions in connection with a journey by plane. At the same time, pictures from an IFE system are normally not accessible to the passengers for later use, such as storing or sharing the images. Aside from technical hurdles, airlines are often unwilling to give up control over the acquired data.

### Summary

Accordingly, there is a need for a technique that facilitates the provision of image information.

According to a first aspect, an aircraft computing device according to claim 1, for providing image information from an aircraft to a party of a terrestrial communication network, is provided. The aircraft computing device comprises a processor unit and a storage unit storing program code which, when executed by the processor unit, configures the computing device to receive a sequence of pictures acquired by a camera of the aircraft, output the received pictures towards a user of the aircraft, receive user input, the user input indicating a selection by the user of at least one picture from the sequence of pictures and a party of a terrestrial communication network, and output the at least one picture selected by the user for transmission towards the party of the terrestrial communication network.

The aircraft computing device may be configured to be fixedly installed in the aircraft. The aircraft computing device may further comprise input and output interfaces for receiving and outputting information. The sequence of pictures may correspond to video information acquired by the camera. For example, the sequence of pictures may correspond to live video information.

The aircraft computing device is configured to output the received pictures towards, and independently receive user input from, a plurality of users of the aircraft. In addition or as an alternative, the aircraft computing device may be configured to receive and output a plurality of sequences of pictures from a plurality of cameras of the aircraft. For example, the aircraft computing device may be configured to receive and output the plurality of sequences of pictures towards one or more users of the aircraft simultaneously.

The party of the communication network may be a subscriber's phone or email account. Alternatively, the party may be a website, for example a website of a social media service, which is hosted at one or more servers connected to the communication network. The user input indicates the party based on at least one of a phone number, an email address and a uniform resource locator (URL) associated with the party.

According to a second aspect, a system for providing image information from an aircraft to a party of a terrestrial communication network is provided. The system comprises an aircraft computing device as presented herein, and an aircraft camera which is mounted to the aircraft and which is configured to acquire a sequence of pictures and to output the sequence of pictures for reception by the aircraft computing device.

The camera may be configured to acquire and output live video information.

The system may comprise a plurality of aircraft cameras mounted to the aircraft. At least one camera may be mounted to the aircraft such that it acquires image information from outside the aircraft. For example, the camera may be mounted such that it acquires image information corresponding to an external perspective on at least parts of the aircraft. For example, the camera may be mounted near a tail or a wing tip of the aircraft.

The system may further comprise an aircraft transmission unit configured to connect with a terrestrial communication network. The aircraft transmission unit may further be configured to transmit image information from the aircraft towards the terrestrial communication network. The aircraft computing device may be configured to output the at least one picture for transmission via the aircraft transmission unit.

For example, the aircraft transmission unit may be a base station of the aircraft which is communicatively connected to the terrestrial communication network.

The system may further comprise a user interface device. The user interface device may be configured to provide graphical output to the user. The user interface device may further be configured to receive input from the user. The aircraft computing device may be configured to output the received pictures towards the user, and to receive the user input, via the user interface device. For example, the user interface device may comprise a touch-sensitive screen.

The user interface device may be mounted to the aircraft near a seat of the user. As an example, the system may comprise a plurality of user interface devices, wherein each of the user interface devices is mounted to the aircraft near a different seat from among a plurality of seats of a plurality of users of the aircraft.

In addition or as an alternative, the system may further comprise a communication interface for communication with a mobile user equipment. The aircraft computing device may be configured to output the received pictures towards the mobile user equipment via the communication interface. The aircraft computing device may be configured to receive the user input from the mobile user equipment via the communication interface. The communication interface may be configured for wireless communication with the mobile user equipment. In addition or as an alternative, the communication interface may comprise an electric contact for contacting an electric contact of the mobile user equipment. The mobile user equipment may be a smartphone or a tablet PC.

The aircraft computing device may be configured to read out contact information which is stored in a memory of the mobile user equipment and which corresponds to one or more parties of the terrestrial communication network. The user input may indicate the party based on a selection by the user from among stored contacts. The aircraft computing device may output the at least one picture for transmission towards the party based at least partly on read-out contact information corresponding to the selected party.

The user input may include contact information of the party of the terrestrial communication network. The aircraft computing device may output the at least one picture for transmission towards the party based at least partly on the input contact information.

According to a third aspect, there is provided an aircraft comprising a system as presented herein.

According to a fourth aspect, a method according to claim 13, for providing image information from an aircraft to a party of a terrestrial communication network, is provided. The method comprises receiving, by a computing device of the aircraft, a sequence of pictures acquired by a camera of the aircraft. The method further comprises outputting, by the computing device, the received pictures towards a user of the aircraft, receiving, by the computing device, user input, the user input indicating a selection by the user of at least one picture from the sequence of pictures and a party of a terrestrial communication network, and outputting, by the computing device, the at least one picture selected by the user for transmission towards the party of the terrestrial communication network.

According to a fifth aspect, a computer program product is provided. The computer program product comprises portions of program code which, when executed by a processor unit of an aircraft computing device, configure the aircraft computing device to perform the method as presented herein.

According to a sixth aspect, there is provided a storage medium storing a computer program product as presented herein.

### Brief Description of the Drawings

Embodiments of the technique presented herein are described herein below with reference to the accompanying drawings, in which:
- Fig. 1: schematically illustrates an aircraft computing device according to an embodiment of the present disclosure;
- Fig. 2: schematically illustrates an example of a system according to an embodiment of the present disclosure;
- Fig. 3: is a flow diagram of a method according to an embodiment of the present disclosure;
- Fig. 4: schematically illustrates an example of a user interface device according to the present disclosure;
- Fig. 5: schematically illustrates another example of a system according to an embodiment of the present disclosure.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details. For example, those skilled in the art will appreciate that several of the steps, services and functions explained herein below may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories are encoded with one or more programs that perform the steps, services and functions disclosed herein when executed by the one or more processors.

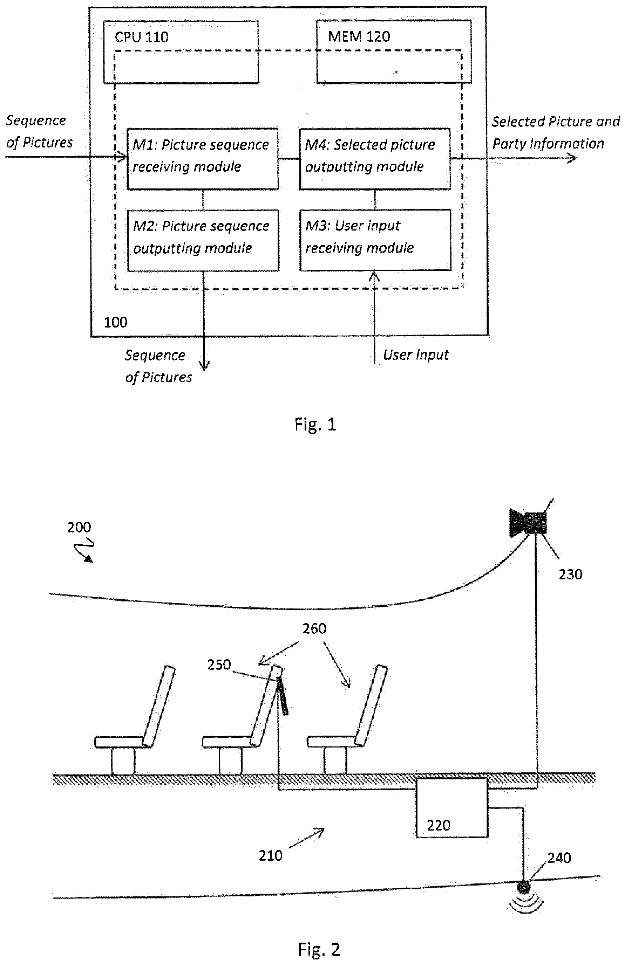

Fig. 1 schematically illustrates a computing device 100 for installation in an aircraft. The computing device 100 comprises a central processing unit (CPU) 110 and a memory (MEM) 120 for storing data, such as program code and graphical content. The processor unit 110 is connected to the memory 120 to access the data stored therein. In particular, the processor unit 110 is adapted to execute program code stored in the memory 120, to read out stored data from the memory 120, and/or to determine processed data for storage in the memory 120.

The computing device 100 facilitates the provision of image information from an aircraft, in which the computing device 100 is installed, to a party of a terrestrial communication network. For that purpose, as indicated by the dashed line in Fig. 1, the memory 120 contains software code for execution by the processor unit 110 to thereby provide different functionalities, M1 to M4. In particular, the computing device 100 is configured to receive, by means of a picture sequence receiving module, M1, a sequence of pictures which has been acquired by a camera of the aircraft. For example, the computing device 100 receives live video information from a tail camera of the aircraft which is connected to the computing device 100 at an input interface (not shown) of the computing device 100.

By means of a picture sequence outputting module, M2, the computing device 100 outputs the received pictures towards one or more users of the aircraft. For example, the computing device 100 outputs the video information that has been received from the tail camera to a display device which is connected to the computing device 100 at an output interface (not shown) of the computing device 100. By means of the display device, the received video information is then displayed to one or more passengers in the aircraft.

While viewing the output picture sequence, a user may select a particular portion, for example, a single picture from the live video, by providing corresponding user input. For example, the video information is output to a passenger at a touch sensitive display, whereas the passenger selects a picture from the displayed video by touching a part of the display at a moment when the picture is being displayed. In addition, the passenger provides information on a member of a terrestrial communication network, for example, by inputting a telephone number, an e-mail address or a URL, to thereby determine a party of the communication network to whom the selected picture is to be sent. The computing device 100 receives the user input concerning the selection of the picture and the party information by means of a user input receiving module, M3. Based on the received sequence of pictures and the received user input, the computing device 100 determines, by means of a selected picture outputting module M4, the selected picture for output towards the party. For example, the computing device 100 outputs the selected picture, in a message directed to the indicated party, to a base station of the aircraft which is communicatively connected to the terrestrial communication network.

In Fig. 1, the computing device 100 is shown as an integral device with a single processing unit 110 and a single memory 120. However, in alternative examples, the computing device 100 is implemented as a distributed computing environment, comprising a plurality of processing units and/or memory units in communication with one another. In further examples, the computing device 100 at least temporarily stores the received and/or output pictures, whereas the user input indicating the selected picture provides an identifier, such as a time stamp, of the selected picture. Based on that identifier, the computing device 100 may then determine, from among the stored pictures, the particular picture which is intended for transmission to the network. In an alternative example, upon selection by the user, the display device sends back to the computing device 100 the graphical data of the selected picture. In that case, temporary storage of the initially received sequence of pictures by the computing device 100 can be dispensed with. Further in that case, if the computing device 100 is implemented as a distributed computing system, a communication between the picture sequence receiving module, M1, and the selected picture outputting module, M4, as indicated in Fig. 1 by the line between the corresponding boxes, is not required. Accordingly, the functionality shown in the left part of Fig. 1 can be implemented totally separate from the functionality shown in the right part of Fig. 1.

By means of the described functionality, the computing device 100 permits passengers in an aircraft to conveniently select and share with one or more other members of a communication network attractive graphical contents from an aircraft camera. A user can also transmit the graphical contents to an account that is personal to him or her, such as the user's own email or social media account, and thereby get direct access to the graphical content. At the same time, the computing device 100 permits an operator of the aircraft full control over the passengers' access to the graphical content and to which extent, or under which conditions, a passenger is allowed to utilize such contents. For example, conditions may be defined for the computing device 100 concerning a type of graphical content or a moment when such content is meant to be made accessible to a passenger for transmission to a network party. In an exemplary implementation, outputting the selected graphical content for transmission is delayed, for example, in accordance with predefined transmission intervals. In another example, all selected and transmitted contents from one or more flights are transmitted to a central server, from which a user can later download the desired images, for example, based on an identifier code which has been provided to the user by the operator. Implementations which include a delayed transmission or accessing of the selected graphical contents also allow the operator to analyze certain parts of the contents and/or prevent certain images from getting public. Moreover, the operator of the aircraft, e.g. an airline, can effectively reduce the amount of data that becomes accessible to each passenger, for example, by limiting a passenger's selection to a single picture out of a video stream.

The computing device 100 further provides the opportunity for the operator to modify the selected graphical content prior to transmission to the network. For example, the operator can include advertisements or other commercially relevant information into the picture. For example, the information can include advertisements which have been provided by advertising partners of the aircraft's operator, such as hotels, travel agencies, etc. Also, the information can be chosen based on one or more criteria, such as a flight destination, an age or a nationality of the passenger and/or a price range of the passenger's ticket. The aircraft camera can also be positioned such that an outer portion of the aircraft which bears the operator's name, such as the name or the symbol of an airline, is visible on every picture. In that manner, the described technique provides commercial benefits to the operator of the aircraft and makes the provision of a corresponding service to the passengers lucrative.

Fig. 2 schematically illustrates a cross-sectional view on a part of a fuselage of an aircraft 200. The aircraft 200 comprises a system 210 for providing image information from the aircraft 200 to a party of a terrestrial communication network. The system 210 comprises a computing device 220 corresponding to the computing device 100 of Fig. 1. The system 210 further comprises an aircraft camera 230 which in the shown example is fixedly installed near the tail of the aircraft 200. The system 210 also comprises a transmission unit 240, for example, as part of a base station of the aircraft 200, and a user interface device 250, and various seats 260 for users of the aircraft 200.

Corresponding to the example of Fig. 1, the computing device 220 receives image information that has been captured by the camera 230, such as live video information which is permanently acquired by the camera 230 to show an external view on the aircraft and/or its surroundings. Different from the shown example, the camera 230 can be installed in the aircraft 200 at any other position. Also, existing aircraft cameras which are provided mainly for other purposes, such as a landing gear camera, can be used as the camera 230. The computing device 220 outputs at least parts of the received image information towards the user interface device 250. In the example of Fig. 2, the user interface device 250 is arranged in the aircraft 200 near a seat 260 of a passenger, in order to provide the output image information to the passenger on or near that seat. For example, the user interface device 250 comprises a touch-sensitive screen to present to the passenger the output image information.

When the passenger wishes to select particular parts of the output image pictures, he provides corresponding user input to the user interface device 250, for example, by touching a particular part of the touch-sensitive screen. In addition, the user provides input corresponding to a party of a terrestrial communication network, to whom he or she wishes to send the selected picture. For example, the passenger can input, by means of a virtual keyboard which is displayed at the user interface device 250, an e-mail address, a telephone number or a URL of the receiving party. The computing device 220 receives that input from the user interface device 250 and, based thereon, determines for output a message which includes the selected picture and which is directed to the specified party and outputs that message to the transmission unit 240.

In some examples, the message further includes an identity of the passenger. For example, the passenger is prompted to input a personal identifier, such as a telephone number or an email address, to identify himself or herself as the sender of the message. In that manner, it can be avoided that the transmitted message is filtered out as anonymous by a spam filter of the receiving party. In other examples, the described technique further enables a user to enrich the selected picture with additional information, such as a written note or other graphical or non-graphical elements which the passenger may create by means of the user interface device 250.

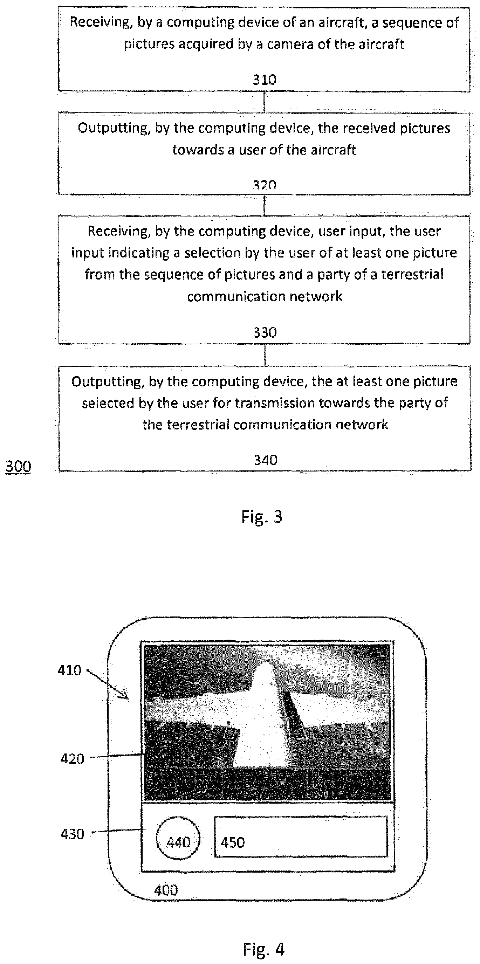

Fig. 3 is a flow diagram of a method 300. The method 300 can be performed, for example, by the computing devices 100 of Fig. 1 and 220 of Fig. 2. The method 300 comprises receiving, by a computing device of an aircraft, a sequence of pictures acquired by a camera of the aircraft, step 310. The method 300 further comprises outputting, by the computing device, the received pictures towards the user of the aircraft, step 320, and receiving, by the computing device, user input, the user input indicating a selection by the user of at least one picture from the sequence of pictures and a party of a terrestrial communication network, step 330. The method 300 further comprises outputting, by the computing device, the at least one picture selected by the user for transmission towards the party of the terrestrial communication network, step 340.

The method 300 corresponds to the technique described in Figs. 1 and 2. Conversely, the optional and/or exemplary implementations as described in connection with Figs. 1 and 2 apply correspondingly also to the method 300 of Fig. 3.

Fig. 4 schematically illustrates an example of a user interface device 400 for use in connection with the technique as described herein. For example, the user interface device 400 can be used as the user interface device 250 of Fig. 2. The user interface device 400 comprises a user interface 410, for example, a touch-sensitive screen. In its upper part, the user interface 410 includes a display portion 420, whereas in the lower part of the user interface 410 an input portion 430 is provided. The input portion 430 further comprises different input fields 440, 450. In the shown example, the output and input portions 420, 430 are shown as different parts of the same user interface 410. In alternative examples, separate interfaces for input or output can be provided. Moreover, whereas in the shown example, the user interface 410 is a touch-sensitive screen, other examples comprise other types of display devices and/or inputting means, such as a conventional LCD display and/or mechanical input buttons.

In the example of Fig. 4, the output portion 420 of the user interface 410 shows a picture of an external view on parts of the aircraft, as it is seen from a tail camera of the aircraft. At the same time, additional information relating to the flight is shown. In the input portion 430 of the user interface 410, a button 440, such as a soft button, is arranged. By pushing the button 440 a user of the user interface device 400 selects the picture that is currently shown in the output portion 420 for transmission to a certain party. Meanwhile, the input field 450, such as a virtual keyboard, permits the user to specify the party to whom the picture is to be sent. For example, the user can input a telephone number, an e-mail address or a URL associated with the receiving party via the input field 450. The input field 450 can further be used to create additional content, such as a text message, for transmission with the selected picture.

In some examples the user interface device 400 is configured to become fixedly installed in the aircraft. Other examples of the user interface device 400 include mobile devices which can be carried around, or be removable attached to, the aircraft by the passenger.

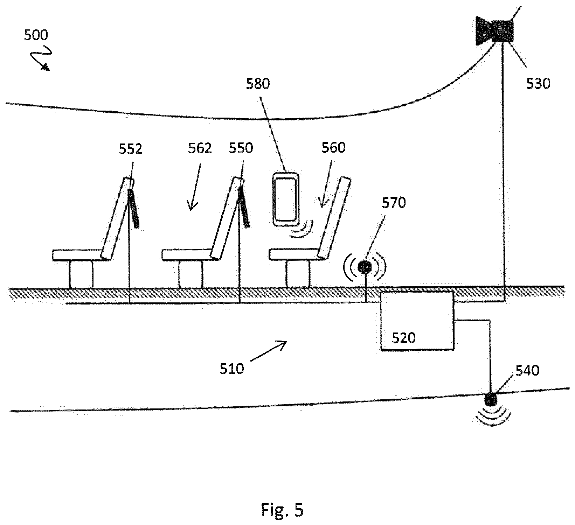

Fig. 5 schematically illustrates a cross-sectional view on a part of a fuselage of another aircraft 500 comprising a system 510 for providing image information from the aircraft 500 to a party of a terrestrial communication network. Similar to the system 210 of Fig. 2, the system 510 of Fig. 5 comprises a computing device 520, an aircraft camera 530, a transmission unit 540 and a user interface device 550 arranged near a seat 560 of a passenger of the aircraft 500. However, different from the system 210 of Fig. 2, the system 510 of Fig. 5 further includes a plurality of user interface devices 550, 552 connected to the computing device 520 as well as a communication interface 570 connected to the computing device 520 and configured to communicate with a mobile user equipment 580. In the shown example, the communication interface 570 is a wireless communication interface. In other examples, however, the communication interface 570 includes electric contacts for physically connecting with electric contacts of the mobile user equipment 580. For example, the communication interface 570 can be part of a socket which is arranged near the seat 560 of a passenger and which is adapted to accommodate the mobile user equipment 580 while electrically contacting the mobile user equipment 580. The mobile user equipment 580 can be a smartphone or a tablet PC or any other mobile device, which may be personal to the passenger.

In the system 510, one or more functions of the user interface device 550, as described above in connection with the user interface device 250 of Fig. 2, are implemented also, or as an alternative, by the mobile user equipment 580. In some examples, all functions of the user interface device 550 as described above in connection with Fig. 2 are implemented by the mobile user equipment 580. For that purpose, use is made of a communication between the communication interface 570 of the system 510 and the mobile user equipment 580 as well as outputting and inputting means of the mobile user equipment 580. In certain examples, the computing device 520 outputs the received pictures to the mobile user equipment 580 by means of wireless communication between the communication interface 570 and the mobile user device 580, where the pictures are output to a user by means of a display of the mobile user equipment 580. Conversely, user input is provided through inputting means, such as a touch-sensitive screen or a keyboard of the mobile user equipment 580, and transmitted to the computing device 520 via the same wireless connection. For the wireless connection, a WLAN infrastructure as already existing on many passenger aircrafts can be used.

In the example of Fig. 5, each of the user interface devices and mobile user equipment 550, 552, 580 is adapted to output image information acquired by the camera 530. Moreover, each of the devices 550, 552, 580 is suited to receive user input independently from the others and, based on that input, initiate transmission of image information via the transmission unit 540 to individually specified parties of one or more terrestrial communication networks.

In some examples of the system 510, the system 510 is configured to read out stored contact information from the mobile user equipment 580, corresponding to one or more parties of a communication network, while the user may not be actively using the mobile user equipment 580. The system 510 may then present the read-out contacts to the user via the user interface device 550. The user thus merely needs to select the intended party, for example, from among a list of read-out contacts which are displayed to him or her on the user interface device 550. In other examples, when the user is actively using the mobile user equipment 580 for the technique presented herein, he or she may simply select a party from among contact information stored on the mobile user equipment 580. The mobile user equipment 580 then automatically transmits the complete contact information, such as a phone number, an e-mail address or a URL, to the computing device 520 via the communication interface 570. For the described wireless communication between a mobile user equipment 580 and the system 510, short range communication techniques, such as WLAN and Bluetooth, are particularly suited. Moreover, near field communication (NFC) can be used, for example, in order to associate a passenger's mobile user equipment 580 with the on-board user interface device 550 which corresponds to the seat of the passenger.

## Claims

1. An aircraft computing device (100; 220; 520) for providing image information from an aircraft (200; 500) to a party of a terrestrial communication network, the aircraft computing device (100; 220; 520) comprising a processor unit (110) and a storage unit (120) storing program code which, when executed by the processor unit (110), configures the computing device (100; 220; 520) to:
receive a sequence of pictures acquired by a camera (230; 530) of the aircraft (200; 500);
output the received pictures towards at least one user of the aircraft (200; 500);
receive user input, the user input indicating a selection by the at least one user of at least one picture from the sequence of pictures; and
output the at least one picture selected by the user for transmission towards a party of a communication network,
**characterized in that**:
the communication network is a terrestrial communication network;
the user input indicates a selection by the user of the party of the terrestrial communication network, wherein the user input indicates the party based on at least one of a phone number, an email address and a uniform resource locator, URL, associated with the party, and
the aircraft computing device is configured to output the received pictures towards, and independently receive user input from, a plurality of users of the aircraft.

2. A system (210; 510) for providing image information from an aircraft (200; 500) to a party of a terrestrial communication network, the system (210; 510) comprising:
an aircraft computing device (100; 220; 520) according to claim 1, and
an aircraft camera (230; 530) which is mounted to the aircraft (200; 500) and which is configured to acquire a sequence of pictures and to output the sequence of pictures for reception by the aircraft computing device (100; 220; 520).

3. The system (210; 510) according to claim 2, further comprising:
an aircraft transmission unit (240; 540) configured to connect with a terrestrial communication network and to transmit image information from the aircraft (200; 500) towards the terrestrial communication network,
wherein the aircraft computing device (100; 220; 520) is configured to output the at least one picture for transmission via the aircraft transmission unit (240; 540).

4. The system (210; 510) of claim 2 or 3, further comprising:
a user interface device (250; 400; 550, 552) configured to provide graphical output to the user and receive input from the user,
wherein the aircraft computing device (100; 220; 520) is configured to output the received pictures towards the user, and to receive the user input, via the user interface device (250; 400; 550, 552).

5. The system (210; 510) of claim 4, wherein the user interface device (250; 400; 550, 552) comprises a touch-sensitive screen (410); and/or
wherein the user interface device (250; 400; 550, 552) is mounted to the aircraft near a seat (260; 560, 562) of the user.

6. The system (210; 510) of any one of claims 3 to 5, further comprising:
a communication interface (570) for communication with a mobile user equipment (580) .

7. The system (210; 510) of claim 6, wherein the aircraft computing device (100; 220; 520) is configured to output the received pictures towards the mobile user equipment (580) via the communication interface (570); and/or
wherein the aircraft computing device (100; 220; 520) is configured to receive the user input from the mobile user equipment (580) via the communication interface (570).

8. The system (210; 510) of claim 6 or 7, wherein the communication interface (570) is configured for wireless communication with the mobile user equipment (580); and/or
wherein the mobile user equipment (580) is a smartphone or a tablet PC.

9. The system (210; 510) of any one of claims 6 to 8, wherein the aircraft computing device (100; 220; 520) is configured to read out contact information which is stored in a memory of the mobile user equipment (580) and which corresponds to one or more parties of the terrestrial communication network.

10. The system (210; 510) of claim 9, wherein the user input indicates the party based on a selection by the user from among stored contacts and wherein the aircraft computing device (100; 220; 520) outputs the at least one picture for transmission towards the party based at least partly on read-out contact information corresponding to the selected party.

11. The system (210; 510) of any one of claims 2 to 10, wherein the user input includes contact information of the party of the terrestrial communication network and wherein the aircraft computing device (100; 220; 520) outputs the at least one picture for transmission towards the party based at least partly on the input contact information.

12. An aircraft (200; 500) comprising a system (210; 510) according to any one of claims 2 to 11.

13. A method (300) for providing image information from an aircraft to a party of a terrestrial communication network, the method comprising:
receiving (310), by a computing device of the aircraft, a sequence of pictures acquired by a camera of the aircraft;
outputting (320), by the computing device, the received pictures towards at least one user of the aircraft;
receiving (330), by the computing device, user input, the user input indicating a selection by the at least one user of at least one picture from the sequence of pictures; and
outputting (340), by the computing device, the at least one picture selected by the user for transmission towards a party of a communication network,
**characterized in that**:
the communication network is a terrestrial communication network;
the user input indicates a selection by the user of the party of the terrestrial communication network, wherein the user input indicates the party based on at least one of a phone number, an email address and a uniform resource locator, URL, associated with the party, and
the received pictures are output towards, and user input is independently received from, a plurality of users of the aircraft.

14. A computer program product comprising portions of program code which, when executed by a processor unit of an aircraft computing device, configure the aircraft computing device to perform the method of claim 13.

15. A storage medium storing the computer program product of claim 14.

## Patentansprüche

1. Luftfahrzeugdatenverarbeitungsvorrichtung (100; 220; 520) zum Bereitstellen von Bildinformationen von einem Luftfahrzeug (200; 500) an einen Teilnehmer eines terrestrischen Kommunikationsnetzwerks, wobei die Luftfahrzeugdatenverarbeitungsvorrichtung (100; 220; 520) eine Prozessoreinheit (110) und eine Speichereinheit (120) umfasst, die Programmcode speichert, der, wenn durch die Prozessoreinheit (110) ausgeführt, die Datenverarbeitungsvorrichtung (100; 220; 520) ausbildet zum:
Empfangen einer Sequenz von durch eine Kamera (230; 530) des Luftfahrzeugs (200; 500) erfassten Bildern;
Ausgeben der empfangenen Bilder an zumindest einen Benutzer des Luftfahrzeugs (200; 500);
Empfangen von einer Benutzereingabe, wobei die Benutzereingabe eine Auswahl, durch den zumindest einen Benutzer, zumindest eines Bildes aus der Sequenz von Bildern angibt; und
Ausgeben des zumindest einen durch den Benutzer ausgewählten Bildes zur Übertragung an einen Teilnehmer eines Kommunikationsnetzwerks,
**dadurch gekennzeichnet, dass**:
das Kommunikationsnetzwerk ein terrestrisches Kommunikationsnetzwerk ist;
die Benutzereingabe eine Auswahl durch den Benutzer des Teilnehmers des terrestrischen Kommunikationsnetzwerks angibt, wobei die Benutzereingabe den Teilnehmer basierend auf zumindest einem aus einer Telefonnummer, einer E-Mail-Adresse und einem einheitlichen Ressourcenzeiger (URL, uniform resource locator) in Verbindung mit dem Teilnehmer angibt, und
die Luftfahrzeugdatenverarbeitungsvorrichtung ausgebildet ist zum Ausgeben der empfangenen Bilder an, und unabhängigen Empfangen von einer Benutzereingabe von, mehrere(n) Benutzer(n) des Luftfahrzeugs.

2. System (210; 510) zum Bereitstellen von Bildinformationen von einem Luftfahrzeug (200; 500) an einen Teilnehmer eines terrestrischen Kommunikationsnetzwerks, wobei das System (210; 510) umfasst:
eine Luftfahrzeugdatenverarbeitungsvorrichtung (100; 220; 520) nach Anspruch 1, und
eine Luftfahrzeugkamera (230; 530), die am Luftfahrzeug (200; 500) befestigt ist und die ausgelegt ist zum Erfassen einer Sequenz von Bildern und zum Ausgeben der Sequenz von Bildern zum Empfang durch die Luftfahrzeugdatenverarbeitungsvorrichtung (100; 220; 520).

3. System (210; 510) nach Anspruch 2, das ferner umfasst:
eine Luftfahrzeugübertragungseinheit (240; 540), ausgebildet zum Verbinden mit einem terrestrischen Kommunikationsnetzwerk und zum Senden von Bildinformationen von dem Luftfahrzeug (200; 500) an das terrestrische Kommunikationsnetzwerk,
wobei die Luftfahrzeugdatenverarbeitungsvorrichtung (100; 220; 520) ausgebildet ist zum Ausgeben des zumindest einen Bildes zur Übertragung über die Luftfahrzeugübertragungseinheit (240; 540).

4. System (210; 510) nach Anspruch 2 oder 3, das ferner umfasst:
eine Benutzerschnittstellenvorrichtung (250; 400; 550, 552), ausgebildet zum Bereitstellen einer grafischen Ausgabe an den Benutzer und zum Empfangen einer Eingabe von dem Benutzer,
wobei die Luftfahrzeugdatenverarbeitungsvorrichtung (100; 220; 520) ausgebildet ist zum Ausgeben der empfangenen Bilder an den Benutzer und zum Empfangen der Benutzereingabe über die Benutzerschnittstellenvorrichtung (250; 400; 550, 552).

5. System (210; 510) nach Anspruch 4, wobei die Benutzerschnittstellenvorrichtung (250; 400; 550, 552) einen berührungsempfindlichen Bildschirm (410) umfasst; und/oder
wobei die Benutzerschnittstellenvorrichtung (250; 400; 550, 552) am Luftfahrzeug in der Nähe eines Sitzes (260; 560, 562) des Benutzers montiert ist.

6. System (210; 510) nach einem der Ansprüche 3 bis 5, das ferner umfasst:
eine Kommunikationsschnittstelle (570) zur Kommunikation mit einer mobilen Benutzereinrichtung (580).

7. System (210; 510) nach Anspruch 6, wobei die Luftfahrzeugdatenverarbeitungsvorrichtung (100; 220; 520) ausgebildet ist zum Ausgeben der empfangenen Bilder an die mobile Benutzereinrichtung (580) über die Kommunikationsschnittstelle (570); und/oder
wobei die Luftfahrzeugdatenverarbeitungsvorrichtung (100; 220; 520) ausgebildet ist zum Empfangen der Benutzereingabe von der mobilen Benutzereinrichtung (580) über die Kommunikationsschnittstelle (570).

8. System (210; 510) nach Anspruch 6 oder 7, wobei die Kommunikationsschnittstelle (570) ausgebildet ist für drahtlose Kommunikation mit der mobilen Benutzereinrichtung (580); und/oder
wobei die mobile Benutzereinrichtung (580) ein Smartphone oder ein Tablet-PC ist.

9. System (210; 510) nach einem der Ansprüche 6 bis 8, wobei die Luftfahrzeugdatenverarbeitungsvorrichtung (100; 220; 520) ausgebildet ist zum Auslesen von Kontaktinformationen, die in einem Speicher der mobilen Benutzereinrichtung (580) gespeichert sind, und die einem oder mehreren Teilnehmern des terrestrischen Kommunikationsnetzwerks entsprechen.

10. System (210; 510) nach Anspruch 9, wobei die Benutzereingabe den Teilnehmer basierend auf einer Auswahl durch den Benutzer aus gespeicherten Kontakten angibt, und wobei die Luftfahrzeugdatenverarbeitungsvorrichtung (100; 220; 520) das zumindest eine Bild zur Übertragung zum Teilnehmer zumindest teilweise basierend auf den ausgelesenen Kontaktinformationen entsprechend dem ausgewählten Teilnehmer ausgibt.

11. System (210; 510) nach einem der Ansprüche 2 bis 10, wobei die Benutzereingabe Kontaktinformationen des Teilnehmers des terrestrischen Kommunikationsnetzwerks umfasst und wobei die Luftfahrzeugdatenverarbeitungsvorrichtung (100; 220; 520) das zumindest eine Bild zur Übertragung zum Teilnehmer zumindest teilweise basierend auf den eingegebenen Kontaktinformationen ausgibt.

12. Luftfahrzeug (200; 500), umfassend ein System (210; 510) nach einem der Ansprüche 2 bis 11.

13. Verfahren (300) zum Bereitstellen von Bildinformationen von einem Luftfahrzeug an einen Teilnehmer eines terrestrischen Kommunikationsnetzwerks, wobei das Verfahren umfasst:
Empfangen (310), durch eine Datenverarbeitungsvorrichtung des Luftfahrzeugs, einer Sequenz von durch eine Kamera des Luftfahrzeugs erfassten Bildern;
Ausgeben (320), durch die Datenverarbeitungsvorrichtung, der empfangenen Bilder an den zumindest einen Benutzer des Luftfahrzeugs;
Empfangen (330), durch die Datenverarbeitungsvorrichtung, einer Benutzereingabe, wobei die Benutzereingabe eine Auswahl, durch den zumindest einen Benutzer, zumindest eines Bildes aus der Sequenz von Bildern angibt; und
Ausgeben (340), durch die Datenverarbeitungsvorrichtung, des zumindest einen durch den Benutzer ausgewählten Bildes zur Übertragung an einen Teilnehmer eines Kommunikationsnetzwerks,
**dadurch gekennzeichnet, dass**:
das Kommunikationsnetzwerk ein terrestrisches Kommunikationsnetzwerk ist;
die Benutzereingabe eine Auswahl durch den Benutzer des Teilnehmers des terrestrischen Kommunikationsnetzwerks angibt, wobei die Benutzereingabe den Teilnehmer basierend auf zumindest einem aus einer Telefonnummer, einer E-Mail-Adresse und einem einheitlichen Ressourcenzeiger (URL, uniform resource locator) in Verbindung mit dem Teilnehmer angibt, und
die empfangenen Bilder an mehrere Benutzer des Luftfahrzeugs ausgegeben werden und eine Benutzereingabe unabhängig davon von diesen empfangen wird.

14. Computerprogrammprodukt, umfassend Teile von Programmcode, die, wenn durch eine Prozessoreinheit einer Luftfahrzeugdatenverarbeitungsvorrichtung ausgeführt, die Luftfahrzeugdatenverarbeitungsvorrichtung dazu ausbildet, das Verfahren nach Anspruch 13 durchzuführen.

15. Speichermedium, das das Computerprogrammprodukt nach Anspruch 14 speichert.

## Revendications

1. Dispositif informatique d'aéronef (100 ; 220 ; 520) pour fournir une information d'image en provenance d'un aéronef (200 ; 500) à une partie d'un réseau de communication terrestre, le dispositif informatique d'aéronef (100 ; 220 ; 520) comprenant une unité de traitement (110) et une unité de stockage (120) stockant un code de programme qui, lorsqu'il est exécuté par l'unité de traitement (110), configure le dispositif informatique (100 ; 220 ; 520) pour : recevoir une séquence d'images acquises par une caméra (230 ; 530) de l'aéronef (200 ; 500) ; émettre les images reçues vers au moins un utilisateur de l'aéronef (200 ; 500) ;
recevoir une entrée d'utilisateur, l'entrée d'utilisateur indiquant une sélection par l'au moins un utilisateur d'au moins une image de la séquence d'images ; et
émettre l'au moins une image sélectionnée par l'utilisateur en vue de sa transmission vers une partie d'un réseau de communication,
le dispositif étant **caractérisé en ce que** :
le réseau de communication est un réseau de communication terrestre ;
l'entrée d'utilisateur indique une sélection par l'utilisateur de la partie du réseau de communication terrestre, l'entrée d'utilisateur indiquant la partie sur la base d'au moins une information parmi un numéro de téléphone, une adresse électronique et un localisateur uniforme de ressources (URL) associés à la partie ; et
le dispositif informatique d'aéronef est configuré pour émettre les images reçues vers une pluralité d'utilisateurs de l'aéronef et recevoir indépendamment une entrée d'utilisateur en provenance de la pluralité d'utilisateurs de l'aéronef.

2. Système (210 ; 510) de fourniture d'informations d'image en provenance d'un aéronef (200 ; 500) à une partie d'un réseau de communication terrestre, le système (210 ; 510) comprenant :
un dispositif informatique d'aéronef (100 ; 220 ; 520) selon la revendication 1 ; et
une caméra d'aéronef (230 ; 530) montée sur l'aéronef (200 ; 500) et configurée pour acquérir une séquence d'images et pour émettre la séquence d'images en vue de leur réception par le dispositif informatique d'aéronef (100 ; 220 ; 520).

3. Système (210 ; 510) selon la revendication 2, comprenant en outre :
une unité de transmission d'aéronef (240 ; 540), configurée pour se connecter à un réseau de communication terrestre et pour transmettre des informations d'image depuis l'aéronef (200 ; 500) vers le réseau de communication terrestre,
le dispositif informatique d'aéronef (100 ; 220 ; 520) étant configuré pour émettre l'au moins une image en vue de sa transmission par l'intermédiaire de l'unité de transmission d'aéronef (240 ; 540).

4. Système (210 ; 510) selon la revendication 2 ou 3, comprenant en outre :
un dispositif d'interface d'utilisateur (250 ; 400 ; 550, 552), configuré pour fournir une sortie graphique à l'utilisateur et recevoir une entrée en provenance de l'utilisateur,
le dispositif informatique d'aéronef (100 ; 220 ; 520) étant configuré pour émettre les images reçues vers l'utilisateur et pour recevoir l'entrée d'utilisateur par l'intermédiaire du dispositif d'interface d'utilisateur (250 ; 400 ; 550, 552).

5. Système (210 ; 510) selon la revendication 4, dans lequel le dispositif d'interface d'utilisateur (250 ; 400 ; 550, 552) comprend un écran tactile (410) ; et/ou
dans lequel le dispositif d'interface d'utilisateur (250 ; 400 ; 550, 552) est monté dans l'aéronef à proximité d'un siège (260 ; 560, 562) de l'utilisateur.

6. Système (210 ; 510) selon l'une quelconque des revendications 3 à 5, comprenant en outre : une interface de communication (570) pour communiquer avec un équipement d'utilisateur mobile (580).

7. Système (210 ; 510) selon la revendication 6, dans lequel le dispositif informatique d'aéronef (100 ; 220 ; 520) est configuré pour émettre les images reçues vers l'équipement d'utilisateur mobile (580) par l'intermédiaire de l'interface de communication (570) ; et/ou
dans lequel le dispositif informatique d'aéronef (100 ; 220 ; 520) est configuré pour recevoir l'entrée d'utilisateur en provenance de l'équipement d'utilisateur mobile (580) par l'intermédiaire de l'interface de communication (570).

8. Système (210 ; 510) selon la revendication 6 ou 7, dans lequel l'interface de communication (570) est configurée pour communiquer sans fil avec l'équipement d'utilisateur mobile (580) ; et/ou
dans lequel l'équipement d'utilisateur mobile (580) est un smartphone ou une tablette PC.

9. Système (210 ; 510) selon l'une quelconque des revendications 6 à 8, dans lequel le dispositif informatique d'aéronef (100 ; 220 ; 520) est configuré pour lire des informations de contact qui sont stockées dans une mémoire de l'équipement d'utilisateur mobile (580) et qui correspondent à une ou plusieurs parties du réseau de communication terrestre.

10. Système (210 ; 510) selon la revendication 9, dans lequel l'entrée d'utilisateur indique la partie sur la base d'une sélection par l'utilisateur parmi des contacts stockés, et dans lequel le dispositif informatique d'aéronef (100 ; 220 ; 520) émet l'au moins une image en vue de sa transmission vers la partie sur la base, au moins en partie, d'informations de contact lues, correspondant à la partie sélectionnée.

11. Système (210 ; 510) selon l'une quelconque des revendications 2 à 10, dans lequel l'entrée d'utilisateur inclut des informations de contact de la partie du réseau de communication terrestre, et dans lequel le dispositif informatique d'aéronef (100 ; 220 ; 520) émet l'au moins une image en vue de sa transmission vers la partie sur la base, au moins en partie, des informations de contact entrées.

12. Aéronef (200 ; 500) comprenant un système (210 ; 510) selon l'une quelconque des revendications 2 à 11.

13. Procédé (300) de fourniture d'informations d'image en provenance d'un aéronef à une partie d'un réseau de communication terrestre, le procédé consistant à :
recevoir (310), par un dispositif informatique de l'aéronef, une séquence d'images acquises par une caméra de l'aéronef ;
émettre (320), par le dispositif informatique, les images reçues vers au moins un utilisateur de l'aéronef ;
recevoir (330), par le dispositif informatique, une entrée d'utilisateur, l'entrée d'utilisateur indiquant une sélection par l'au moins un utilisateur d'au moins une image de la séquence d'images ; et
émettre (340), par le dispositif informatique, l'au moins une image sélectionnée par l'utilisateur en vue de sa transmission vers une partie d'un réseau de communication,
le procédé étant **caractérisé en ce que** :
le réseau de communication est un réseau de communication terrestre ;
l'entrée d'utilisateur indique une sélection par l'utilisateur de la partie du réseau de communication terrestre, l'entrée d'utilisateur indiquant la partie sur la base d'au moins une information parmi un numéro de téléphone, une adresse électronique et un localisateur uniforme de ressources (URL) associés à la partie ; et
les images reçues sont émises vers une pluralité d'utilisateurs de l'aéronef et une entrée d'utilisateur est reçue indépendamment en provenance de la pluralité d'utilisateurs de l'aéronef.

14. Produit de programme informatique, comprenant des parties d'un code de programme qui, lorsqu'elles sont exécutées par une unité de traitement d'un dispositif informatique d'aéronef, configurent le dispositif informatique d'aéronef pour réaliser le procédé selon la revendication 13.

15. Support de stockage, stockant le produit de programme informatique selon la revendication 14.
